# EUROPÄISCHE PATENTANMELDUNG

(11) **EP 1 362 625 A1**
(43) Veröffentlichungstag der Anmeldung: **19.11.2003**
(21) Anmeldenummer: 03009997.2
(22) Anmeldetag: 02.05.2003
(51) Int. Cl.: B01D 3/14

(54) **Verfahren zur schonenden destillativen Trennung von Stoffgemischen**

(30) Priorität: 13.05.2002 DE 10221122
(71) Anmelder: Bayer Aktiengesellschaft, 51368 Leverkusen (DE)
(72) Erfinder: Deibele, Ludwig, Dr., 50677 Köln (DE); Heinz, Dieter, Dr., 51373 Leverkusen (DE); Leu, Jan Thomas, Dr., 42799 Leichlingen (DE); Schäfer, Johannes-Peter, 51515 Kürten (DE); Fahrenkamp, Kai, 51371 Leverkusen (DE); Scheinert, Wolfgang, Dr., 51375 Leverkusen (DE); Schilling, Thomas, 40789 Monheim (DE); Wagner, Paul, Dr., 40597 Düsseldorf (DE)

(57) **Zusammenfassung**

Die Erfindung betrifft ein Verfahren zur schonenden destillativen Trennung von Stoffgemischen in halbdiskontinuierlicher Betriebsweise, wobei in einem ersten Schritt eine Kolonne kontinuierlich mit einem Zulauf beaufschlagt wird und der Zulauf zumindest in verschiedene Fraktionen getrennt wird und wobei eine der Fraktionen kontinuierlich in einen Behälter abgeführt wird und in einem zweiten Schritt die in den Behälter abgeführte Fraktion der Kolonne wieder zugeführt wird und diskontinuierlich erneut in verschiedene Fraktionen getrennt wird.

## Beschreibung

Die Erfindung betrifft ein Verfahren zur schonenden destillativen Trennung von Stoffgemischen in halbdiskontinuierlicher Betriebsweise.

Kontinuierliche Trennprozesse mit einer Kolonne sowie diskontinuierliche Trennprozesse mittels einer Destillationsblase mit aufgesetzter Kolonne sind bekannt und zusammenfassend beispielsweise in "Thermische Trennverfahren" (K. Sattler, Ausgabe 2001, VCH Verlagsgesellschaft, Weinheim) beschrieben.

Bei diskontinuierlichen Trennprozessen, die zur Trennung von zwei und insbesondere mehr als zwei Komponenten häufig Anwendung finden, wird zunächst die Destillationsblase mit dem zu trennenden Gemisch befüllt und bis zum Siedepunkt erhitzt. Anschließend können die Fraktionen in aufsteigender Reihenfolge ihres Siedepunktes über den Kolonnenkopf entnommen werden, wobei gleichzeitig die Sumpftemperatur ansteigt.

Insbesondere dann, wenn eine Komponente aufgrund ihres Siedepunktes nicht als erste Fraktion entnommen wird und bei längerer thermischer Belastung zu Nebenreaktionen wie zum Beispiel der Zersetzung neigt, erweist sich diese Fahrweise als sehr nachteilig.

Bei hohen Anforderungen an die Reinheit dieser schwerer siedenden Komponenten besteht die Möglichkeit der Entnahme von Zwischenschnitten geringerer Reinheit. Diese werden dann beispielsweise bei der nächsten Trennung zum Zulauf gegeben. Dadurch wird allerdings ein Teil des Zulaufs im Kreis gefahren, wodurch die Raum-Zeit-Ausbeuten erheblich sinken. Ein weiterer Nachteil der diskontinuierlichen Fahrweise ist der deutlich höhere spezifische Energiebedarf im Vergleich zur kontinuierlichen Fahrweise (siehe Kaibel, Krug, Chemie Ingenieur Technik 70, 1998, S. 711-713).

In DE-OS 42 26 905 wird eine diskontinuierliche Destillation beschrieben, wobei eine Teilfraktion in einem Seitenstrom entnommen wird und zu einem späteren Zeitpunkt wieder in die Kolonnen zurückgeführt wird. Auf diese Weise wird der spezifische Energiebedarf leicht reduziert. Nachteilig ist jedoch, dass die Prozesssteuerung deutlich komplexer und ein zusätzlicher Behälter für die Zwischenspeicherung benötigt wird. Weiterhin wird auch in diesem Verfahren der Sumpfbehälter zu Beginn befüllt und schwerer siedende Komponenten werden während der gesamten Destillationszeit im flüssig siedenden Sumpf thermisch belastet.

In EP-A 638 345 wird eine Kolonne mit je einem Behälter am Sumpf und am Kopf beschrieben, die je nach gewünschter Fahrweise als Verstärker- oder Abtriebsteil verwendet werden kann. Für Stoffgemische, deren Mittelsiederfraktion einen Anteil von mindestens 70 Gew.-% ausmacht, können die Destillationszeiten auf diese Weise reduziert werden. Allerdings ist dieses Verfahren apparativ aufwändig und nicht generell anzuwenden.

Baichun und Zhicai (Huagong Gongcheng, 22, 1994, S. 30-34) beschreiben die Trennung eines Mehrkomponentensystems in einer Kolonne mit zwei Behältern. Der komplette instationäre Prozess einer diskontinuierlichen Betriebsweise wird in n-1 kontinuierliche Schritte zerlegt, um ein Gemisch mit n Fraktionen aufzutrennen. Dabei wird ein Behälter als Zulaufbehälter benötigt und ein zweiter, um den Sumpfablauf aufzunehmen. Diese Fahrweise ermöglicht die simultane Verwendung der Kolonne als Abtriebs- und Verstärkerteil und damit einen akzeptablen spezifischen Energieverbrauch. Allerdings ist auch für dieses Verfahren ein zusätzlicher Behälter notwendig.

Maczynski und Maczynska (Przemysl Chemiczny 49, 1970, S. 599-601) schlagen für die Trennung eines Zweistoffgemisches ein Verfahren vor, das die Vorteile der kontinuierlichen und der diskontinuierlichen Fahrweise kombiniert. Dabei wird in einem ersten Schritt die Kolonne, an deren unterem Ende sich eine Destillationsblase befindet, mit einem kontinuierlichen Zulauf beaufschlagt und über den Kolonnenkopf die erste Fraktion entnommen. Der Sumpfablauf wird genutzt, um die Destillationsblase zu füllen. Auch bei diesem Verfahren muss der Inhalt der Destillationsblase auf Siedetemperatur gehalten werden, so dass die thermische Belastung der schwerer siedenden Komponenten sehr hoch ist.

Es bestand daher das Bedürfnis, ein Verfahren zur destillativen Trennung von Stoffgemischen bereitzustellen, das einen günstigen spezifischen Energiebedarf aufweist, den apparativen Aufwand klein hält und die thermische Belastung von empfindlichen Komponenten gering hält. Weiterhin soll eine Verbesserung für Gemische beliebiger Zusammensetzung erzielbar sein.

Es wurde nun ein Verfahren zur destillativen Trennung von Stoffgemischen gefunden, das dadurch gekennzeichnet ist, dass
a) eine Kolonne kontinuierlich mit einem Zulauf beaufschlagt wird und der Zulauf zumindest in eine Leichtsiederfraktion und eine Schwersiederfraktion und gegebenenfalls eine Mittelsiederfraktion getrennt wird und wobei eine der Fraktionen kontinuierlich in einen Behälter abgeführt wird und
b) nach Stoppen des kontinuierlichen Zulaufs die in Schritt a) in den Behälter abgeführte Fraktion der Kolonne wieder zugeführt wird und diskontinuierlich in beliebiger Verschaltung von Kessel und Kolonne erneut zumindest in eine Leichtsiederfraktion und eine Schwersiederfraktion und gegebenenfalls eine Mittelsiederfraktion getrennt wird.

Von der Erfindung ist auch ein Verfahren umfasst, in dem die Schritte a) und b) einoder mehrfach wiederholt werden.

Es sei darauf hingewiesen, dass vom Umfang der Erfindung auch beliebige Kombinationen von Merkmalen und deren Vorzugsbereichen umfasst sind.

Im Schritt a) wird die Kolonne kontinuierlich mit einem Zulauf beaufschlagt.

Der Begriff "kontinuierlich" schließt zeitliche Änderungen der Zulaufmenge ebenso ein wie vorübergehende Unterbrechungen des Zulaufs, wie sie beispielsweise bei intervallweisem oder gestuftem bzw. über eine vorgegebene Rampe sich ändernden Zulauf realisiert werden.

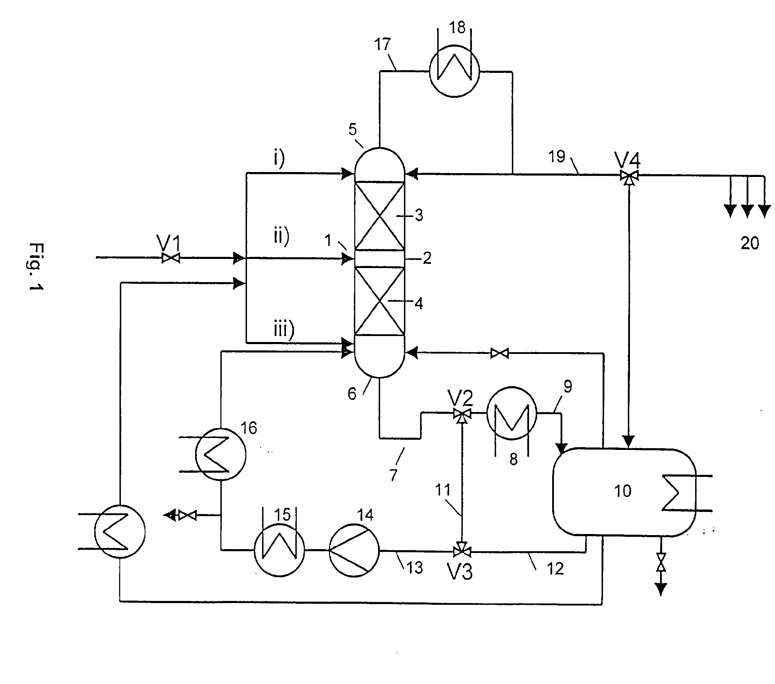

Je nach Trennproblem und abhängig von der Lage der Zulaufstelle dient die Kolonne entweder als Abtriebskolonne (Fig. 1, Zulauf i), d.h. alle theoretischen Trennstufen liegen unterhalb der Zulaufstelle (n_{A} = n), Verstärkerkolonne (Fig. 1, Zulauf iii), d.h. alle theoretischen Trennstufen liegen oberhalb der Zulaufstelle (n_{A} = 0), oder als Kolonne mit Abtriebsteil und Verstärkerteil (Fig. 1, Zulauf ii), d.h. n_{A} theoretische Trennstufen liegen unterhalb, n-n_{A} oberhalb der Zulaufstelle, wobei n die Gesamtzahl der theoretische Trennstufen der Kolonne ist.

Bevorzugt wird die Zulaufstelle so gewählt, dass die Kolonne einen Abtriebsteil und einen Verstärkerteil besitzt.

Als Kolonnen können die dem Fachmann bekannten Kolonnen eingesetzt werden. Beispielsweise sind das Füllkörper oder geordnete Packungen enthaltende Packungskolonnen oder Bodenkolonnen. Ist die Entnahme von Seitenstromfraktionen (Mittelsiederfraktionen) vorgesehen, kann die Kolonne auch als Trennwandkolonne oder thermisch gekoppelte Kolonne ausgestaltet sein.

Ferner ist es auch möglich, die Kolonne sowohl mit Böden als auch mit Packungselementen auszustatten. Zum Beispiel können im Verstärkungsteil Packungen und im Abtriebsteil Böden eingesetzt werden.

Zur Minimierung von Hold-Up und Druckverlust zur schonenden thermischen Trennung eignen sich bevorzugt Füllkörper oder geordnete Packungen enthaltende Packungskolonnen sowie entsprechende Bodenkonstruktionen in Bodenkolonnen.

Die für das erfindungsgemäße Verfahren einsetzbaren Böden, Füllkörper und Packungen sind zum Beispiel in Henry Kister, Distillation Design, McGrawHill, 1992, K. Sattler, Thermische Trenntechnik, Verlag VCH, 2001 beschrieben.

Die Anzahl der theoretischen Trennstufen in der Kolonne kann beispielsweise 2 bis 150, bevorzugt 4 bis 70, besonders bevorzugt 6 bis 60 betragen.

Zum Anfahren der Kolonne vor Schritt a) kann beispielsweise ein Teil des zu trennenden Stoffgemisches verwendet werden oder eine Fraktion davon, die zum Beispiel aus einer vorgängigen Trennung stammen kann. In einer bevorzugten Ausführungsform wird der Sumpf der Kolonne gerade mit so viel Flüssigkeit befüllt, dass der Verdampfer in Betrieb genommen werden kann.

Weiterhin ist bevorzugt, die Kolonne mit einer Schwersiederfraktion des zu trennenden Stoffgemisches anzufahren, um den Gehalt an Leichtsiedern im Kolonnensumpf von vornherein möglichst gering zu halten.

Unter den Begriffen "Schwersieder" und "Schwersiederfraktionen" sind solche Stoffe oder Stoffgemische zu verstehen, die einen höheren Siedepunkt besitzen als die gegebenenfalls vorhandenen Mittelsieder und Mittelsiederfraktionen, die wiederum einen höheren Siedepunkt besitzen als die Leichtsieder und Leichtsiederfraktionen. Die Begriffe beziehen sich dabei jeweils relativ auf einen Teilschritt und können für Schritt a) und Schritt b) für einen einzelnen Stoff unterschiedliche Bedeutung haben. So kann beispielsweise ein Schwersieder aus Schritt a) in Schritt b) ein Leichtsieder sein.

Bei der destillativen Trennung des Zulaufs wird der Zulauf zumindest in eine Leichtsiederfraktion und eine Schwersiederfraktion und gegebenenfalls eine Mittelsiederfraktion getrennt, wobei eine der Fraktionen kontinuierlich in einen Behälter abgeführt wird.

Bevorzugt wird in Schritt a) mindestens eine Leichtsiederfraktion über den Kolonnenkopf und mindestens eine Schwersiederfraktion über den Kolonnensumpf entnommen.

Weiterhin bevorzugt wird in Schritt a) eine Leichtsiederfraktion über den Kolonnenkopf (auch Kopffraktion), eine Mittelsiederfraktion über einen Seitenstrom (auch Seitenstromfraktion) und eine Schwersiederfraktion über den Kolonnensumpf (auch Sumpffraktion) entnommen.

Insbesondere bei der Nutzung der Kolonne als Verstärker- und Abtriebsteil während des Schrittes a) ist es möglich, auch Mittelsiederfraktionen mit sehr hohen Reinheitsanforderungen ohne Zwischenschritte zu erhalten. Besonders bevorzugt wird in Schritt a) eine Leichtsiederfraktion über den Kolonnenkopf und eine Schwersiederfraktion über den Kolonnensumpf entnommen.

Es kann entweder eine Kopffraktion, gegebenenfalls eine Mittelsiederfraktion oder eine Sumpffraktion in den Behälter überführt werden, bevorzugt die Kopffraktion oder die Sumpffraktion.

Vorzugsweise wird diejenige Fraktion in den Behälter abgeführt, deren Reinheitsanforderungen im kontinuierlichen Schritt nicht erfüllt werden.

Die Abführung in den Behälter erfolgt dabei kontinuierlich, wobei der Begriff kontinuierlich wie oben stehend definiert ist.

Bei thermisch empfindlichen Produkten kann die Fraktion, die in den Behälter abgeführt wird, bei einer Temperatur verweilen, die bezogen auf den Kolonnensumpf-Druck unter ihrem Siedepunkt liegt und daher beispielsweise im Vergleich zur diskontinuierlichen Destillation thermisch erheblich geringer belastet wird.

Vorzugsweise erfolgt die Abführung und das Verweilen im Behälter ohne zusätzliche Wärmezufuhr oder unter Kühlung. Die Verweiltemperatur kann je nach Produkteigenschaften gewählt werden.

Es sind alle üblichen und z.B. bei Kister, Sattler und Stichlmair (Distillation - Principles and Practice, Wiley VCH, 1998) aufgeführten Regelungskonzepte für die kontinuierlich und diskontinuierlich betriebene Kolonne zur Automatisierung des erfindungsgemäßen Verfahrens anwendbar. In einer bevorzugten Ausführungsform des erfindungsgemäßen Verfahrens erfolgt in Schritt a) je nach gewünschter Zielreinheit des Kopf- oder Sumpfproduktes die Regelung über geeignete Temperaturmessungen im Verstärker- und/oder Abtriebsteil.

Ist der Behälter zumindest teilweise befüllt, wird Schritt a) durch Stoppen des Zulaufs beendet und im Schritt b) der Inhalt des Behälters der Kolonne zugeführt. Im Schritt b) kann die Kolonne wahlweise abwärts, aufwärts oder simultan abwärts und aufwärts gefahren werden. Die Verschaltungsfreiheit im Schritt b) bedingt, dass die Kolonne nicht unmittelbar mit dem Kessel, sondern vorzugsweise über eine Rohrleitung mit Flüssigkeitsverschluss, beispielsweise auch mit einer Absperreinrichtung, verbunden ist.

Bei der Abwärts-Fahrweise wird der Behälter mit dem Kondensatablauf verschaltet, und der Behälterablauf geht als Rücklauf auf den Kolonnenkopf. Die Fraktionen werden als Schwersiederfraktionen am Sumpf abgezogen, bis zum Schluss die letzte Leichtsiederfraktion im Behälter in der gewünschten Reinheit verbleibt.

Bevorzugt wird in Schritt b) das Gemisch in der Aufwärts-Fahrweise diskontinuierlich getrennt. Der Behälter ist dann in den Sumpfkreislauf eingebunden, wobei die Flüssigkeit aus dem Sumpf über den Behälter und den Verdampfer zurück in die Kolonne geführt wird. Über Kopf werden eine oder mehrere Leichtsiederfraktionen abgezogen, bis die letzte Schwersiederfraktion in gewünschter Reinheit im Behälter ist. Dabei kann es sich auch um den Destillationsrückstand handeln.

Die simultane Aufwärts- und Abwärts-Fahrweise in Schritt b) kann durch eine Anbindung des Behälter in der Mitte der Kolonne realisiert werden. Es werden sowohl am Kopf Leichtsiederfraktionen und am Sumpf Schwersiederfraktionen abgenommen. Diese Ausführung von Schritt b) wird vorteilhaft dann beendet, wenn eine Mittelsiederfraktion - oder wahlweise ein Zwischenschnitt - in der gewünschten Reinheit/Zusammensetzung im Behälter übrig ist. Die Batchdestillation mit Mittelbehälter ist beispielsweise beschrieben in M. Warter et al., Comp. Chem. Eng. Suppl. (1999) S. 915-S. 918.

Für die Schritte a) und b) ist auch eine Beheizung mit Direktdampf möglich. Bei der Aufwärts-Fahrweise kann aus dem Behälter verdampft werden. Im bevorzugten Fall kann der Behälter allerdings zur schonenden Behandlung der Einsatzprodukte bei einer Temperatur unterhalb der Siedetemperatur betrieben werden. Für das erfindungsgemäße Verfahren wird daher bevorzugt ein Verdampfer verwendet. Als Verdampfer sind alle dem Fachmann bekannten Verdampfertypen einsetzbar, die eine geringe Temperaturerhöhung erfordern und die Verdampfung aus dünnen Schichten/-Filmen ermöglichen. Bevorzugt werden Fallfilmverdampfer oder Dünnschichtverdampfer eingesetzt. Gegebenenfalls können dem Verdampfer ein oder mehrere Vorwärmer vorgeschaltet sein.

Vom Rahmen der Erfindung ist auch ein Verfahren umfasst, in dem die Schritte a) und b) jeweils unabhängig voneinander ein- oder mehrfach wiederholt werden.

Das erfindungsgemäße Verfahren ist insbesondere geeignet für die Trennung von Mehrkomponentengemischen. Beispiele für Mehrkomponentengemische sind Reaktionsgemische oder Lösungsmittelgemische.

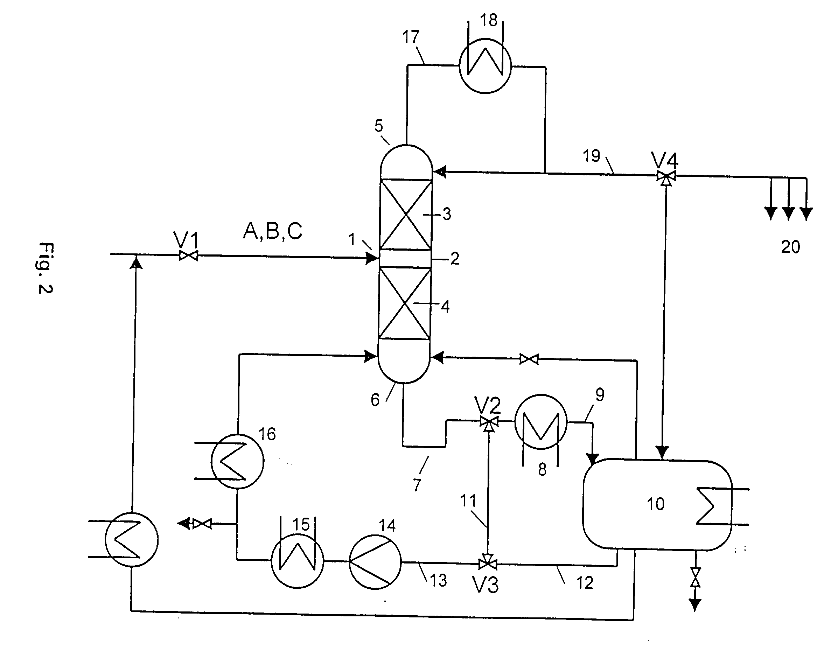

Das erfindungsgemäße Verfahren wird anhand der Figuren 1 und 2 beispielhaft erläutert:

### Schritt a)

Die Kolonne 2 wird mit einem zu trennenden Stoffgemisch mit den Komponenten A (niedrigster Siedepunkt), B (mittlerer Siedepunkt), C (höchster Siedepunkt) über ein Zulaufventil V1 und den Zulauf 1, der sich wahlweise im oberen (i), im mittleren (ii) oder im unteren Teil der Kolonne befindet, kontinuierlich beschickt. Bei der Beschickung der Kolonne 2 über den mittleren Teil (ii), wie in Figur 2 dargestellt, wird die Kolonne 2 folglich für Schritt a) in einen Abtriebs- 4 und einen Verstärkerteil 3 getrennt. Dabei wird Komponente A über den Kolonnenkopf 5 entnommen und die Komponenten B und C über den Kolonnenboden 6 und über die Leitungen 7 und 9 und das dazwischengeschaltete Ventil (V2) und den Wärmetauscher 9 zumindest teilweise in einen Behälter 10 abgeführt. Beim Erreichen des vorgegebenen Füllstands im Behälter 10 wird das Zulaufventil V1 geschlossen. Der Behälter 10 wird nun an den Sumpfkreislauf (Kolonnensumpf 6 => Leitungen 7, 9 und 11, Ventile V2 und V3 => Behälter 10 => Leitung 13, Pumpe 14, Vorwärmer 15, Verdampfer 16 => und Kolonnensumpf 6, angeschlossen. Am Kopf der Kolonne 5 wird der Leichtsieder des Gemisches B in gewünschter Reinheit über die Leitung 19 in eine Sammelvorrichtung 20 abgezogen. Im Sumpf wird der Schwersieder C aufkonzentriert. Der Schritt ist abgeschlossen, wenn C die gewünschte Zielreinheit erreicht hat. Wahlweise können auch die Komponenten B und C über den Zulauf 1 wieder der Kolonne 2 zugeführt werden, die Komponente B über den Kolonnenkopf 5 und die Komponente C über den Kolonnensumpf 6, dann allerdings in einen separaten Produktbehälter.

Vom Rahmen der Erfindung ist auch ein Verfahren umfasst, in dem die Schritte a) und b) jeweils unabhängig voneinander ein- oder mehrfach wiederholt werden.

Das erfindungsgemäße Verfahren ist insbesondere geeignet für die Trennung von Mehrkomponentengemischen. Beispiele für Mehrkomponentengemische sind Reaktionsgemische oder Lösungsmittelgemische.

Von der Erfindung ist weiterhin eine Destillationsvorrichtung umfasst, bestehend wenigstens aus einer Kolonne 2, aus deren oberem Teil 5 eine Ableitung 17 über einen Wärmetauscher 18 und eine Leitung 19 an ein Ventil V4 führt, wobei die Leitung 19 mit der Kolonne verbunden ist und weiterhin zu mindestens einer Sammelvorrichtung 20 führt, einem über ein Zulaufventil V1 steuerbaren Zulauf 1, der in die Kolonne mündet, und einem von der Kolonne räumlich getrennten, temperierbaren Behälter 10, der über die Leitungen 7 und 9 mit der Kolonne verbunden ist, die dadurch gekennzeichnet ist, dass die Leitung 7 an ein Ventil V2 führt, das über die Leitung 9, die gegebenenfalls über einen Wärmetauscher 8 führt, mit dem Behälter 10 und über die Leitung 11 mit dem Ventil V3 verbunden ist, wobei das Ventil V3 über die Leitung 12 mit dem Behälter und über die Leitung 13 mit der Kolonne verbunden ist und wobei die Leitung 13 weiterhin eine Pumpe 14, gegebenenfalls einen Vorwärmer 15 und gegebenenfalls einen Verdampfer 16 enthält, und weiterhin die am oberen Ende der Kolonne 2 angebrachte Leitung 19 ein Ventil V4 enthält, das die Kolonne 2 über die Leitung 19 und die Leitung 21 mit dem Behälter 10 verbindet.

Die vorliegende Erfindung zeichnet sich dadurch aus, dass das gesamte Verfahren unter apparativ geringem Aufwand durchgeführt werden kann. Weiterhin können insbesondere Stoffgemische mit thermisch empfindlichen Fraktionen bei sehr guten Raum-Zeit-Ausbeuten schonend abgetrennt werden.

### Beispiele

### Beispiel 1:

Es wurde ein Stoffgemisch, bestehend aus
100 kg n-Hexan
700 kg n-Heptan
200 kg n-Oktan
ohne Zwischenschnitt getrennt, wobei die Reinheit jeweils mindestens 99,0 % betrug.

Dafür wurde eine Kolonne mit zwanzig theoretischen Trennstufen unter folgenden Bedingungen eingesetzt:
Kopfdruck P_{Kopf} = 1 bar
Druckverlust Δp = 1mbar/Stufe
Energiezufuhr (Q) = konstant 50 kW

Die Trennung wurde einmal diskontinuierlich aus einer Destillationsblase mit aufgesetzter Kolonne (I) und erfindungsgemäß (II) durchgeführt. Der Vergleich basiert auf Simulationsrechnungen, allerdings auf der Basis eines vermessenen Stoffsystems und mit einem validierten Kolonnenmodell.

Dabei wurde wie folgt vorgegangen und die in Klammern stehenden Zeiten ermittelt:
(I) Nicht erfindungsgemäß (siehe EP-A 638 345):
   Vorlage des Stoffgemisches in den Kessel
   Destillation von n-Hexan über den Kolonnenkopf (350 min)
   Destillation von n-Heptan (150 min) als zweite Fraktion über den Kolonnenkopf
   als Sumpfrückstand verblieb n-Oktan.
   Gesamtdestillationszeit: 500 min.
(II) Erfindungsgemäß:
   Schritt a) kontinuierliche Beschickung der Kolonne mit dem Stoffgemisch und Entnahme von n-Hexan als Kopfprodukt unter gleichzeitiger Befüllung des Behälters mit n-Heptan/n-Oktan (150 min), danach Beschickung der Kolonne aus dem Behälter und Abtrennung von n-Heptan (150 min) über den Kolonnenkopf, als Sumpfrückstand verbleibt n-Oktan. Gesamtdestillationszeit: 300 min

### Beispiel 2:

Aus der Umsetzung von Phenol und Ethylenoxid wurde ein Gemisch erhalten, das 94 % Phenoxyethanol enthält. Die restlichen 6 % enthalten im Wesentlichen Schwersieder und nicht umgesetztes Phenol. Dieses Gemisch wurde erfindungsgemäß wie folgt aufgearbeitet (entspricht im Wesentlichen den beispielhaften Erläuterungen für Figur 1 und 2).

Die Kolonne 2 wurde als Packungskolonne ausgeführt und mit einem Fallfilmverdampfer 15 beheizt. Die Kolonne 2 wird mit Sumpfprodukt von der letzten Charge oder phenolfreiem Phenoxyethanol, das im Behälter 10 vorgelegt wird, über den Fallfilmverdampfer 15 geheizt und zunächst bei totalem Rücklauf betrieben. Die dafür verwendete Produktmenge stellt nur einen Bruchteil des Behältervolumens dar und ist so ausgewählt, dass gerade die Kolonne 2 damit angefahren werden kann. Nachdem sich das Temperaturprofil in der Kolonne stabilisiert hatte, wurde die Kolonne kontinuierlich mit dem oben beschriebenen Reaktionsgemisch mit allmählich steigendem und zuletzt konstantem Strom beschickt.

Die Zulaufstelle wurde dabei so gewählt, dass die Kolonne 2 sowohl einen Abtriebsteil als auch ein Verstärkerteil aufwies (ii).

Auf diese Weise wurden Phenolgehalte im Sumpf von etwa 10 ppm erreicht.

Am Kopf der Kolonne 5 stellte sich unter Rücklaufbedingungen bei einem absoluten Druck von 30 mbar eine Temperatur von 130°C ein, am Sumpf von 155°C. Bei einem auf 18 mbar geregelten Differenzdruck wurde der Kolonnenkopfdruck bei 30 bis 40 mbar gehalten. Während Schritt a) wird der Kolonne über Kopf ein Vorlauf abgenommen, dessen Phenolgehalt kontrolliert wird.

Der Sumpfablauf der Kolonne 6 wird in den Behälter 10 geführt. Bei maximaler Befüllung des Behälters wurde der Zulauf durch Umstellen des Zulaufventils V1 gestoppt und unmittelbar zu Schritt b) übergegangen und weiterer Vorlauf entnommen. Dabei sank der Phenolgehalt im Vorlauf, und bei Unterschreiten eines bestimmten, von den Qualitätsanforderungen an den Hauptlauf abhängigen Gehaltes an Phenol wurde auf Hauptlauf umgestellt. Bis zum Erreichen einer Kolonnenfußtemperatur von 157°C wurde der Hauptlauf abgenommen und anschließend auf totalen Rücklauf umgestellt. Die Apparatur war dann bereit zur Übernahme der nächsten Charge. Nach sechs Chargen wurde der in der Destillationsblase angesammelte Sumpf ausgeschleust, nachdem man durch Rektifikation eine Phenoxyethanol und höhere Homologe enthaltende Fraktion im Nachlauf abgetrennt hat.

### Beispiel 3:

Im Schritt a) wurde die Kolonne 2 kontinuierlich mit einem Reaktionsgemisch aus der Nitrierung von Ethylbenzol, das im Wesentlichen ortho- und para-Nitroethylbenzol (o-NEB bzw. p-NEB) sowie ca. 7 % meta-Nitroethylbenzol (m-NEB) und 0,5 % Dinitroethylbenzol (Di-NEB) enthält, beschickt. Dabei wurde über den Kolonnenkopf 5 das von Di-NEB befreite Gemisch aus o-NEB, p-NEB und m-NEB entnommen und in den Behälter 10 abgeführt. Über den Kolonnensumpf 6 wurde eine Fraktion entnommen, die ungefähr 10 Masse-% Di-NEB enthielt.

In Schritt b) wurde die Kolonne 2 aus dem Behälter 10 mit dem in Schritt a) erhaltenen Gemisch aus o-NEB, p-NEB und m-NEB beschickt. Dabei wurden über den Kolonnenkopf 5 nacheinander die Fraktionen Vorlauf, o-NEB, Zwischenlauf I und Zwischenlauf II entnommen. Da Di-NEB und andere Schwersieder bereits in Schritt a) entfernt wurden, lag im Sumpf das reine p-NEB vor. Gegebenenfalls folgt eine Nachlaufdestillation mit Abnahme von reinem p-NEB über Kopf.

Durch diese Fahrweise konnte die Verweilzeit des thermisch sensiblen Di-NEB bei hohen Temperaturen auf etwa 6 h gegenüber etwa 150 h bei der herkömmlichen diskontinuierlichen Destillation mit auf die Destillierblase aufgesetzter Kolonne verkürzt werden.

## Patentansprüche

1. Verfahren zur destillativen Trennung von Stoffgemischen, **dadurch gekennzeichnet, dass**
a) eine Kolonne kontinuierlich mit einem Zulauf beaufschlagt wird und der Zulauf zumindest in eine Leichtsiederfraktion und eine Schwersiederfraktion getrennt wird und wobei eine der Fraktionen kontinuierlich in einen Behälter abgeführt wird und
b) nach Stoppen des Zulaufs die in Schritt a) in den Behälter abgeführte Fraktion der gleichen Kolonne wieder zugeführt und erneut zumindest in eine Leichtsiederfraktion und eine Schwersiederfraktion getrennt wird.

2. Verfahren nach Anspruch 1, **dadurch gekennzeichnet, dass** der Zulauf in Schritt a) zumindest in eine Leichtsiederfraktion, eine Mittelsiederfraktion und eine Schwersiederfraktion getrennt wird und in Schritt b) die in Schritt a) in den Behälter abgeführte Fraktion erneut zumindest in eine Leichtsiederfraktion, eine Mittelsiederfraktion und eine Schwersiederfraktion getrennt wird.

3. Verfahren nach einem oder mehreren der Ansprüche 1 bis 2, **dadurch gekennzeichnet, dass** der Schritt a) und/oder Schritt b) unabhängig voneinander einoder mehrfach wiederholt werden.

4. Verfahren nach einem oder mehreren der Ansprüche 1 bis 3, **dadurch gekennzeichnet, dass** die Kolonne gleichzeitig als Abtriebs- und Verstärkerkolonne genutzt wird.

5. Verfahren nach einem oder mehreren der Ansprüche 1 bis 4, **dadurch gekennzeichnet, dass** als Kolonne Füllkörper oder geordnete Packungen enthaltende Packungskolonnen oder Bodenkolonnen, Trennwandkolonnen oder thermisch gekoppelte Kolonnen verwendet werden.

6. Verfahren nach einem oder mehreren der Ansprüche 1 bis 5, **dadurch gekennzeichnet, dass** die Kolonne 2 bis 150 theoretischenTrennstufen besitzt.

7. Verfahren nach einem oder mehreren der Ansprüche 1 bis 6, **dadurch gekennzeichnet, dass** zum Anfahren der Kolonne der Sumpf der Kolonne gerade mit so viel Flüssigkeit befüllt wird, dass der Verdampfer in Betrieb genommen werden kann.

8. Verfahren nach einem oder mehreren der Ansprüche 1 bis 7, **dadurch gekennzeichnet, dass** zum Anfahren der Kolonne eine Schwersiederfraktion des zu trennenden Stoffgemisches verwendet wird.

9. Verfahren nach einem oder mehreren der Ansprüche 1 bis 8, **dadurch gekennzeichnet, dass** die Abführung und das Verweilen der abgeführten Fraktion im Behälter ohne zusätzliche Wärmezufuhr oder unter Kühlung erfolgt.

10. Verfahren nach einem oder mehreren der Ansprüche 1 bis 9, **dadurch gekennzeichnet, dass** das Verweilen der abgeführten Fraktion im Behälter unter Kühlung erfolgt.

11. Verfahren nach einem oder mehreren der Ansprüche 1 bis 10, **dadurch gekennzeichnet, dass** Schritt a) automatisiert durchgeführt wird.

12. Verfahren nach einem oder mehreren der Ansprüche 1 bis 11, **dadurch gekennzeichnet, dass** im Schritt b) die Kolonne abwärts, aufwärts oder simultan abwärts und aufwärts gefahren wird.

13. Verfahren nach einem oder mehreren der Ansprüche 1 bis 12, **dadurch gekennzeichnet, dass** die Kolonne sowohl im Schritt a) als auch im Schritt b) simultan abwärts und aufwärts gefahren wird.

14. Verfahren nach einem oder mehreren der Ansprüche 1 bis 13, **dadurch gekennzeichnet, dass** im Schritt b) die Beschickung der Kolonne aus dem Behälter über einen Verdampfer erfolgt.

15. Verfahren nach Anspruch 14, **dadurch gekennzeichnet, dass** als Verdampfer Fallfilmverdampfer oder Dünnschichtverdampfer eingesetzt werden.

16. Verfahren nach einem oder mehreren der Ansprüche 1 bis 15, **dadurch gekennzeichnet, dass** dem Verdampfer ein oder mehrere Vorwärmer vorgeschaltet sind.

17. Verfahren nach einem oder mehreren der Ansprüche 1 bis 16, **dadurch gekennzeichnet, dass** als Zulauf Reaktionsgemische oder Lösungsmittelgemische eingesetzt werden.

18. Destillationsvorrichtung, bestehend wenigstens aus einer Kolonne (2), aus deren oberem Teil (5) eine Ableitung (17) über einen Wärmetauscher (18) und eine Leitung (19) an ein Ventil (V4) führt, wobei die Leitung (19) mit der Kolonne verbunden ist und weiterhin zu mindestens einer Sammelvorrichtung (20) führt, einem über ein Zulaufventil (V1) steuerbaren Zulauf (1), der in die Kolonne mündet, und einem von der Kolonne räumlich getrennten temperierbaren Behälter (10), der über die Leitungen (7) und (9) mit der Kolonne verbunden ist, **dadurch gekennzeichnet, dass** die Leitung (7) an ein Ventil (V2) führt, das über die Leitung (9), die gegebenenfalls über einen Wärmetauscher (8) führt, mit dem Behälter (10) und über die Leitung (11) mit dem Ventil (V3) verbunden ist, wobei das Ventil (V3) über die Leitung (12) mit dem Behälter und über die Leitung (13) mit der Kolonne verbunden ist und wobei die Leitung (13) weiterhin eine Pumpe (14), gegebenenfalls einen Vorwärmer (15) und gegebenenfalls einen Verdampfer (16) enthält und weiterhin die am oberen Ende der Kolonne (2) angebrachte Leitung (19) ein Ventil (V4) enthält, das die Kolonne (2) über die Leitung (19) und die Leitung (21) mit dem Behälter (10) verbindet.
